# FASCICULE DE BREVET EUROPEEN

(11) **EP 2 872 385 B1**
(45) Date de publication et mention de la délivrance du brevet: **25.05.2016**
(21) Numéro de dépôt: 13744727.2
(22) Date de dépôt: 10.07.2013
(51) Int. Cl.: B62K 11/04, B62K 19/30

(54) **MOTOCYCLETTE A MOTEUR A REFROIDISSEMENT LIQUIDE**
MOTORRAD MIT EINEM FLÜSSIGGEKÜHLTEN MOTOR
MOTORCYCLE WITH A LIQUID COOLED MOTOR

(30) Priorité: 13.07.2012 FR 1256794
(43) Date de publication de la demande: 20.05.2015
(73) Titulaire: RDMO, 49100 Angers (FR)
(72) Inventeur: MIDY, Olivier, F-49190 Rochefort Sur Loire (FR)
(74) Mandataire: IP Trust
(86) Numéro de dépôt international: PCT/FR2013/051656
(87) Numéro de publication internationale: WO 2014/009662

(56) Documents cités:
- US-A- 4 637 486
- US-A1- 2002 023 795
- US-A1- 2008 223 643
- US-A1- 2010 096 201

## Description

### Domaine de l'invention

La présente invention concerne le domaine des motocyclettes comportant un cadre à structure latérale supportant un moteur à refroidissement liquide, comportant un radiateur de liquide de refroidissement du moteur. Elle concerne plus particulièrement le positionnement du radiateur de liquide de refroidissement du moteur.

### Etat de la technique

On connaît dans l'état de la technique différentes solutions pour loger le radiateur de liquide de refroidissement du moteur : en position frontale verticale ou transversale sous la colonne de direction, en position frontale devant la colonne, en position latérale, voire sous la selle.

US 2002/023795 décrit une motocyclette selon le préambule de la revendication 1.

### Inconvénient de l'état de la technique

La plupart des motocyclettes commercialisées utilisent une architecture où le radiateur est placé frontalement. La taille du radiateur adaptée à un refroidissement efficace conduit à un encombrement important.

Lorsque le radiateur est orienté transversalement, il conduit à une extension latérale importante. Lorsqu'il est orienté verticalement, il impose un empattement important.

Une première solution connue est illustrée par le brevet US2002/0023795, concernant un scooter comportant un radiateur placé en dessous de la colonne de direction, entre la roue avant et le moteur. Pour assurer un refroidissement convenable, il est nécessaire de prévoir une largeur importante, produisant un encombrement latéral de la partie avant du scooter, qui ne serait pas approprié pour une motocyclette routière.

Le brevet US2010/096201 décrit une solution où le radiateur est placé sensiblement à l'horizontale, en partie sous l'assise. Le flux d'air de refroidissement est assuré par une prise d'air alimentant la boîte à air du moteur ainsi que le radiateur. La prise d'air est configurée pour se loger entre les tubes de la colonne de direction. Le flux d'air est insuffisant pour assurer un refroidissement correct d'une motocyclette.

On connaît également dans l'état de la technique des solutions consistant à placer un ou deux modules de radiateur latéralement, de part et d'autre d'un plan longitudinal vertical médian de la motocyclette. Le brevet US2008/0223643 décrit une telle solution, où le radiateur est décalé latéralement à côté de l'axe longitudinal. Cette solution n'est pas très satisfaisante car elle augmente l'encombrement latéral.

Le brevet US4637486 présente un autre exemple de solution avec un radiateur décalé latéralement.

Ces différentes solutions ne permettent pas d'assurer un refroidissement efficace avec un radiateur de faible encombrement latéral compatible avec l'architecture d'une motocyclette routière, notamment lorsque le moteur vient en position avancée.

### Solution apportée par l'état de la technique

Afin de remédier à ces inconvénients, l'invention concerne selon son acception la plus générale une motocyclette selon la revendication 1.

Le radiateur s'étend de part et d'autre du plan longitudinal vertical médian de la motocyclette. Il est positionné derrière la colonne de direction, en avant d'un plan vertical transversal passant par l'axe du vilbrequin.

On désignera par « colonne de direction » au sens du présent brevet le tube creux qui est disposé à l'avant de la motocyclette, et qui contient les roulements de direction eux même logés dans les cuvettes. Ce tube creux reçoit l'axe de direction pour fonction de tourner dans les roulements de la colonne de direction. Son rôle est de supporter et guider l'ensemble fourche / roue. La colonne de direction détermine l'angle de chasse.

La direction comprend de façon connue deux tés de direction reliant la fourche (et la roue avant) à la colonne de direction.

Le té inférieur est solidaire de l'axe de direction. Le té supérieur supporte le guidon ou les deux demi-guidons. Les deux tés définissent le déport. C'est à dire la distance entre la colonne de direction et les tubes de fourche.

La définition du point d'intersection avec le plan horizontal se réfère au segment de la colonne de direction, compris entre les tés de direction. Ce point est situé dans les deux tiers supérieurs de ce segment, sur l'axe longitudinal de ce segment.

Avantageusement, le bord supérieur du radiateur est situé entre un plan horizontal haut passant l'un par le té supérieur de la fourche et un plan horizontal bas passant par le té inférieur de la fourche.

De préférence, le radiateur de liquide de refroidissement du moteur est positionné sensiblement verticalement, le plan médian du radiateur formant un angle compris entre -20° et +20° par rapport au plan vertical.

Selon une variante, le radiateur est incurvé, notamment par rapport à un axe de courbure horizontal transversal, ou éventuellement par rapport à un axe de courbure vertical.

Selon une première variante, ledit cadre à structure latérale est constituée par une structure à double poutre.

Selon une deuxième variante, ledit cadre à structure latérale est constituée par une coque autoporteuse.

Selon une troisième variante, ledit cadre à structure latérale est constituée par un cadre en treillis.

Avantageusement, ladite coque autoporteuse présente deux ouïes débouchant chacune dans un conduit traversant longitudinalement les volumes creux de ladite coque autoporteuse, lesdits conduits débouchant au niveau d'un logement transversal destiné à recevoir la partie supérieure du radiateur de liquide de refroidissement du moteur.

### Description détaillée d'un exemple de réalisation

D'autres objets et avantages de l'invention apparaîtront au cours de la description qui suit, faite en référence aux dessins annexés, dans lesquels :
- la figure 1 représente une vue d'une motocyclette selon l'invention en perspective avec une découpe partielle de la zone avant gauche de la coque
- la figure 2 représente une vue de face avant d'une motocyclette selon l'invention.

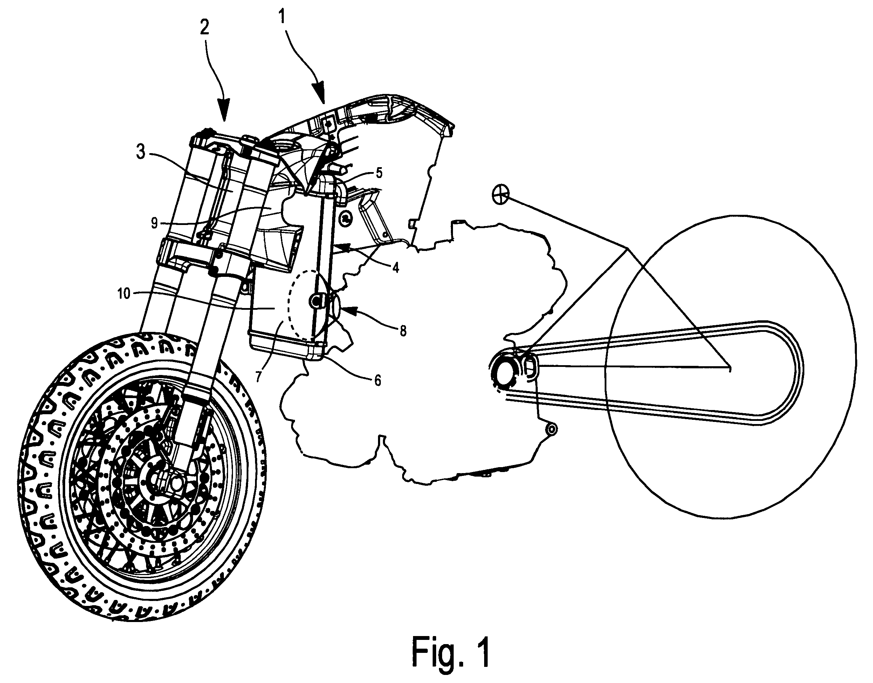

La figure 1 représente une vue schématique d'une motocyclette selon l'invention, avec un coque autoporteuse (1) présentée pour la compréhension de la figure avec une découpe partielle. La mise en oeuvre de l'invention n'est pas limitée à une motocyclette présentant une coque autoporteuse, l'exemple décrit n'étant pas limitatif. L'invention s'applique à tout type de structure de châssis de motocyclette, notamment des structures à double poutre ou des structures en treillis.

La motocyclette comporte un bloc-moteur bicylindre en ligne, avec des cylindres orientés longitudinalement et non pas transversalement et formant un angle d'environ 25° par rapport au plan horizontal. Le cylindre avant est plus bas que le cylindre arrière.

L'architecture décrite à titre d'exemple est basée sur une coque autoporteuse (1) assurant les fonctions de châssis et de carrosserie. La motocyclette ne comporte aucune poutre ou châssis additionnel assurant une liaison mécanique directe entre la colonne de direction d'une part, et le moteur ou le bras oscillant d'autre part. La coque (1) apporte toutes les performances de rigidité et de géométrie de la motocyclette. De même, la coque autoporteuse forme directement la carrosserie extérieure visible (au même titre que le réservoir habituel d'une motocyclette), et reçoit les cas échéant des élément d'habillage extérieur tels que grippe-genou.

Cette coque (1) est une pièce de fonderie unique et monolithique réalisée par coulage d'aluminium, d'alliage d'aluminium ou de magnésium ou encore en carbone.

La coque (1) présente à sa partie avant une excroissance (2) constituant la colonne de direction (3). Cette excroissance (2) présente une forme tubulaire, recevant les paliers de direction. Cette excroissance (2) est intégrée à la coque (1) et ne constitue pas une pièce rapportée ni soudée.

La forme générale de la coque (1) est celle d'un réservoir de motocyclette, s'étendant longitudinalement et se prolongeant à l'arrière par une zone formant l'assise du pilote.

Le radiateur de liquide est positionné derrière la colonne de direction (3). Il présente une hauteur supérieure à la hauteur de la colonne de direction, dans l'exemple décrit, afin de garantir une efficacité optimale.

Le bord inférieur du radiateur de liquide de refroidissement (4) s'étend jusqu'à un plan horizontal passant par la roue avant (11), et de préférence au-dessus des disques de frein (15).

Le radiateur de liquide de refroidissement du moteur (4) est par ailleurs placé en avant du plan vertical transversal passant par le vilebrequin du moteur.

La culasse avant s'étend en dessous du bord inférieur du radiateur de liquide (4).

Le radiateur de liquide de refroidissement du moteur (4) est constitué par deux réservoirs (5, 6) encadrant un faisceau de refroidissement (7) s'étendant sensiblement verticalement. Le liquide de refroidissement du moteur circule verticalement dans ce faisceau (7) cloisonné verticalement pour permettre l'installation de l'entrée et de la sortie du radiateur sur le réservoir supérieur (5).

La partie supérieure du radiateur (4), et notamment la totalité du réservoir supérieur (5), prennent place dans un logement transversal prévu sur la coque autoporteuse (1). Ce logement est fermé latéralement, pour former une encoche permettant d'insérer le haut du radiateur (4).

Des entrées d'air frontales (9) traversent la partie frontale de la coque autoporteuse (1) pour déboucher sur la partie supérieure du radiateur (4). Ces entrées d'air (9) sont disposées de part et d'autre de la colonne de direction (3).

La partie inférieure (10) du radiateur, et notamment le réservoir inférieur (6) déborde de la partie inférieur de la coque (1). Elle peut être masquée visuellement par une calandre étroite.

Un électro-ventilateur (8) est installé sur la face arrière du faisceau (7) pour assurer une ventilation forcée lorsque la motocyclette est à l'arrêt notamment.

La taille du faisceau est déterminée par la surface d'échange, ce qui impose une contrainte sur la largeur et la hauteur du radiateur. La largeur du faisceau détermine la largeur du châssis, et, dans l'exemple décrit, conditionne la largeur de l'encoche transversale.

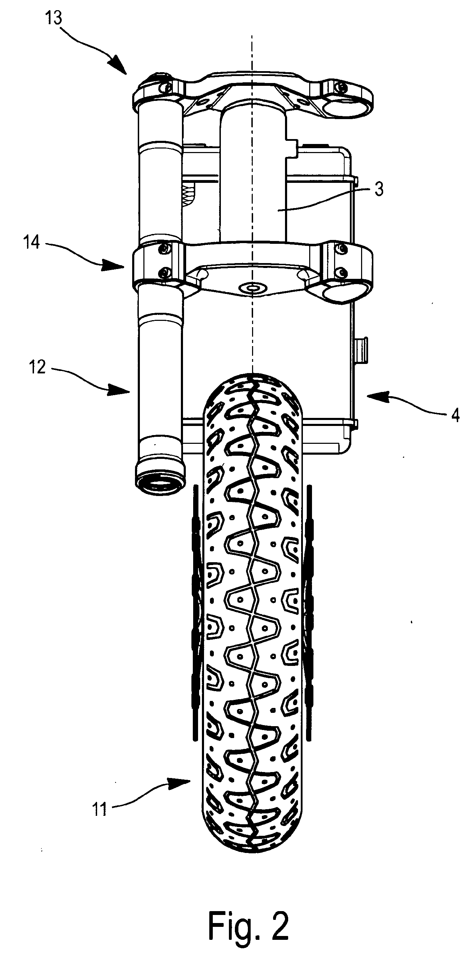

La figure 2 représente une vue de face avant. La roue avant (11) est supportée de manière connue par les bras de fourche (12) qui sont bridés par une té de fourche supérieure (13) et une té de fourche inférieure (14). Le radiateur (4) est situé en arrière de la colonne de direction (3) et de la fourche (12). Pour la simplification du dessin, un seul bras de fourche est représenté.

La partie supérieure du radiateur (4) s'étend jusqu'à un plan compris entre les deux tés de fourche (13, 14). La partie inférieure du radiateur (4) s'étend jusqu'à un plan horizontal déterminé par l'encombrement du moteur et de la roue avant en position totalement enfoncée (par exemple lors d'un freinage).

Le radiateur (4) est monté selon un plan vertical ou légèrement incliné avec un angle de 5 à 10° dans l'exemple décrit.

Le radiateur décrit est plan. Il est possible de prévoir des radiateurs présentant des courbures sans sortir de la présente invention.

## Revendications

1. Motocyclette comportant un cadre à structure latérale supportant un moteur à refroidissement liquide, comportant au moins un radiateur de liquide de refroidissement du moteur, ledit radiateur de liquide de refroidissement du moteur (4) étant positionné entre la colonne de direction (3) et le plan vertical transversal passant par l'axe du vilebrequin et s'étend latéralement de part et d'autre du plan longitudinal médian de la motocyclette, ledit radiateur de liquide de refroidissement du moteur (4) étant positionné sensiblement verticalement, le plan médian du radiateur formant un angle compris entre -20° et +20° par rapport au plan vertical **caractérisée en ce que** le bord supérieur dudit radiateur de liquide de refroidissement est positionné au-dessus d'un plan horizontal passant par un point situé dans les deux tiers supérieurs de la colonne de direction (3), ledit cadre à structure latérale présentant un logement pour recevoir la partie supérieure dudit radiateur (4) de liquide de refroidissement du moteur.

2. Motocyclette selon la revendication principale **caractérisée en ce que** le radiateur de liquide de refroidissement du moteur (4) est incurvé.

3. Motocyclette selon la revendication principale **caractérisée en ce que** ledit radiateur de liquide de refroidissement du moteur (4) est symétrique par rapport au plan longitudinal médian.

4. Motocyclette selon la revendication principale **caractérisée en ce que** le bord inférieur dudit radiateur de liquide de refroidissement du moteur (4) s'étend jusqu'à un plan passant par la roue avant.

5. Motocyclette selon la revendication principale **caractérisée en ce que** ledit cadre à structure latérale est constituée par une structure à double poutre.

6. Motocyclette selon la revendication principale **caractérisée en ce que** ledit cadre à structure latérale est constituée par une coque autoporteuse (1).

7. Motocyclette selon la revendication principale **caractérisée en ce que** ledit cadre à structure latérale est constituée par un cadre en treillis

8. Motocyclette selon la revendication précédente **caractérisée en ce que** ladite coque autoporteuse (1) présente un logement transversal adapté pour recevoir la partie supérieure du radiateur (4).

9. Motocyclette selon la revendication précédente **caractérisée en ce que** ladite coque autoporteuse (1) présente deux ouïes (9) débouchant chacune dans un conduit traversant longitudinalement les volumes creux de ladite coque autoporteuse, lesdits conduits débouchant au niveau d'un logement transversal destiné à recevoir la partie supérieure du radiateur de liquide de refroidissement du moteur.

## Patentansprüche

1. Motorrad mit einem Rahmen mit Seitenstruktur, der einen Motor mit Flüssigkühlung stützt, welcher mindestens einen Kühlmittelkühler umfasst, wobei besagter Kühlmittelkühler (4) zwischen der Lenksäule (3) und der senkrechten, durch die Achse der Kurbelwelle verlaufenden Querebene positioniert ist, und sich seitlich zu beiden Seiten der Längsmittelebene erstreckt, **dadurch gekennzeichnet, dass** der obere Rand besagten Kühlmittelkühlers oberhalb einer horizontalen Ebene, die durch einen, auf den beiden oberen Dritteln der Lenksäule (3) gelegenen Punkt verläuft, gelegen ist, wobei besagter Rahmen mit Seitenstruktur eine Aufnahme für den oberen Teil besagten Kühlmittelkühlers (4) aufweist, besagter Kühlmittelkühler im Wesentlichen senkrecht positioniert ist und die Mittelebene des Kühlers in Bezug auf die senkrechte Ebene einen Winkel zwischen -20° und +20° bildet.

2. Motorrad nach dem Hauptanspruch, **dadurch gekennzeichnet, dass** der Kühlmittelkühler (4) gerundet ist.

3. Motorrad nach dem Hauptanspruch, **dadurch gekennzeichnet, dass** besagter Kühlmittelkühler (4) im Verhältnis zur Längsmittelebene symmetrisch angeordnet ist.

4. Motorrad nach dem Hauptanspruch, **dadurch gekennzeichnet, dass** sich der untere Rand besagten Kühlmittelkühlers (4) bis zu einer durch das Vorderrad verlaufenden Ebene erstreckt.

5. Motorrad nach dem Hauptanspruch, **dadurch gekennzeichnet, dass** besagter Rahmen mit Seitenstruktur aus einer Doppelträgerstruktur besteht.

6. Motorrad nach dem Hauptanspruch, **dadurch gekennzeichnet, dass** besagter Rahmen mit Seitenstruktur aus einer Formschale (1) besteht.

7. Motorrad nach dem Hauptanspruch, **dadurch gekennzeichnet, dass** besagter Rahmen mit Seitenstruktur durch einen Gitterrahmen gebildet wird.

8. Motorrad nach dem vorhergehenden Anspruch, **dadurch gekennzeichnet, dass** besagte Formschale (1) eine quer verlaufende Aufnahme aufweist, die zur Aufnahme des oberen Teils des Kühlers (4) geeignet ist.

9. Motorrad nach dem vorhergehenden Anspruch, **dadurch gekennzeichnet, dass** besagte Formschale (1) zwei Öffnungen (9) aufweist, die jeweils zu einem Rohr führen, welches die Hohlräume besagter Formschale längs durchquert, wobei besagte Rohre zu einer quer verlaufenden Aufnahme führen, die dazu bestimmt ist, den oberen Teil des Kühlmittelkühlers aufzunehmen.

## Claims

1. A motorcycle comprising a frame with a side structure supporting a liquid-cooled engine, comprising at least one engine-coolant radiator, with said engine-coolant radiator (4) being positioned between the steering column (3) and the transverse vertical plane passing through the crankshaft axis and laterally extending on either side of the median longitudinal plane of the motorcycle, with said engine-coolant radiator (4) being positioned substantially vertically, with the median plane of the radiator forming an angle of -20 to +20 relative to the vertical plane, **characterised in that** the upper edge of said coolant radiator is positioned above a horizontal plane passing through a point located in the upper two-thirds of the steering column (3), with said frame with a side structure having a recess for receiving the upper portion of said engine-coolant radiator (4).

2. A motorcycle according to claim 1, **characterised in that** the engine-coolant radiator (4) is curved.

3. A motorcycle according to claim 1, **characterised in that** said engine-coolant radiator (4) is symmetrical relative to the median longitudinal plane.

4. A motorcycle according to claim 1, **characterised in that** the lower edge of said engine-coolant radiator (4) extends up to a plane passing through the front wheel.

5. A motorcycle according to claim 1, **characterised in that** said frame with a side structure is made up of a twin beams structure.

6. A motorcycle according to claim 1, **characterised in that** said frame with a side structure is made up of a unitized shell (1).

7. A motorcycle according to claim 1, **characterised in that** said frame with a side structure is made up of a trellis frame.

8. A motorcycle according to the preceding claim, **characterised in that** said unitized shell (1) has a transverse recess suitable for receiving the upper portion of the radiator (4).

9. A motorcycle according to the preceding claim, **characterised in that** said unitized shell (1) has two openings (9) each leading into a conduit passing longitudinally through the hollow spaces of said unitized structure, with said conduits leading into a transverse recess intended for receiving the upper portion of the engine-coolant radiator.
